# EUROPÄISCHE PATENTSCHRIFT

(11) **EP 1 302 371 B1**
(45) Veröffentlichungstag und Bekanntmachung des Hinweises auf die Patenterteilung: **14.05.2008**
(21) Anmeldenummer: 02021133.0
(22) Anmeldetag: 23.09.2002
(51) Int. Cl.: B60R 16/02

(54) **Redundante Energieversorgung für sicherheitsrelevante Verbraucher in einem Bordnetz**
Redundant power supply for security - related consumers in an onboard network
Alimentation redondante d'énergie pour des comsommateurs de sécurité dans un réseau de bord

(30) Priorität: 11.10.2001 DE 10150379
(43) Veröffentlichungstag der Anmeldung: 16.04.2003
(73) Patentinhaber: ROBERT BOSCH GMBH, 70442 Stuttgart (DE)
(72) Erfinder: Frey, Wunibald, 71701 Schwieberdingen (DE); Knapp, Marc, 71729 Erdmannshausen (DE)

(56) Entgegenhaltungen:
- DE-A- 19 732 229
- DE-A- 19 755 050
- DE-A- 19 855 245
- DE-A- 19 913 131
- DE-A- 19 948 656

## Beschreibung

### Technisches Fachgebiet

Die Erfindung betrifft ein Energieversorgungssystem für Kraftfahrzeug-Bordnetze.

### Stand der Technik

In einem Kfz-Bordnetz gibt es in der Regel mehrere Verbraucher, die wegen ihrer Sicherheitsrelevanz eine äußerst zuverlässige Energieversorgung benötigen. Solche Verbraucher sind beispielsweise elektromotorisch betriebene Radbremsen.

Eine besonders zuverlässige Energieversorgung bieten z.B. Bordnetze mit mehreren Energiequellen (Batterien), die mit Hilfe eines Generators geladen werden.

Aus der DE 197 55 050 A1 ist ein Energieversorgungssystem für sicherheitsrelevante Verbraucher bekannt, in dem mehrere Bremskreise zur Versorgung elektromotorischer Bremsen vorgesehen sind. Dabei wird jede Bremse von wenigstens zwei Energiequellen über eine einzige Versorgungsleitung mit Spannung versorgt. Ein solches System hat den Vorteil, dass bei Ausfall einer der Energiequellen die Versorgung der Bremse durch die andere Energiequelle immer noch gewährleistet ist. Bei einem Fehler in der zur Bremse führenden Versorgungsleitung, z.B. durch einen Kurzschluß oder durch Leitungsbruch, fällt der Verbraucher dennoch aus.

Aus der DE 198 55 245 A1 und der DE 199 13 131 A1 sind zwei redundante Energieversorgungssysteme für Kraftfahrzeuge bekannt. Im Einzelnen zeigt die DE 198 55 245 A1 (nächstkommender Stand der Technik) ein Energieversorgungssystem für Kraftfahrzeugbortinetze mit mehreren Verbrauchern, die von wenigstens einer Energiequelle versorgt werden. Vorgegebene Verbraucher können sowohl an eine erste Versorgungsleitung als auch an eine zweite Versorgungsleitung angeschlossen werden. Da in den Versorgungsleitungen Lade/Trenn-Module verbunden sind, können einzelne Verbraucher gleichzeitig an zwei Energiequellen liegen oder nur an einer. Das ständige Verbinden von sicherheitsrelevanten Verbrauchern mit zwei Energiequellen ist nicht vorgesehen.

Aus der DE 199 13 131 A1 ist ein Energieversorgungssystem mit zwei Batterien bekannt, wobei Verbraucher sowohl von einer ersten Energiequelle als auch von einer zweiten Energiequelle versorgt werden können. Durch geeignete Schaltmittel wird sichergestellt, dass bei Ausfall eine Energiequelle die andere Energiequelle die Versorgung der Verbraucher zuverlässig übernehmen kann. Das ständige Verbinden von sicherheitsrelevanten Verbrauchern mit zwei Energiequellen ist auch hier nicht vorgesehen

Es ist daher die Aufgabe der vorliegenden Erfindung, ein Energieversorgungssystem mit mehreren Energiequellen zu schaffen, das eine zuverlässige Energieversorgung gewährleistet.

Gelöst wird diese Aufgabe durch die im Patentanspruch 1 angegebenen Merkmale. Spezielle Ausgestaltungen der Erfindung sind Gegenstand von Unteransprüchen.

### Vorteile der Erfindung

Der wesentliche Gedanke der Erfindung besteht darin, sicherheitskritische Verbraucher, wie z.B. elektromotorische Bremsen, über zwei separate Versorgungsleitungen mit elektrischer Energie zu versorgen, wobei jeder der Verbraucher über eine erste Versorgungsleitung an einer ersten Energiequelle und über eine zweite Versorgungsleitung an der ersten oder an einer zweiten Energiequelle angeschlossen ist. Bei einem Fehler in einer der Versorgungsleitungen übernimmt somit die andere (redundante) Versorgungsleitung die Versorgung des Verbrauchers.

Die beiden Versorgungsleitungen sind direkt, vorzugsweise an den Klemmen, eines sicherheitsrelevanten Verbrauchers angeschlossen und versorgen den Verbraucher gleichzeitig mit Strom. Zur Entkoppelung der beiden Teilnetze sind im Verbraucher geeignete Mittel, wie z.B. Dioden vorgesehen.

Gemäss der Erfindung ist die erste Energiequelle ein Generator zur Erzeugung einer hohen Versorgungsspannung (42V) mit parallel geschalteter 42V- Batterie, und die zweite Energiequelle eine Batterie, zur Bereitstellung einer niedrigen Versorgungsspannung (14V).

Aufgrund der redundanten Energieversorgung der Verbraucher kann der Leitungsquerschnitt der Versorgungsleitungen wesentlich reduziert werden, z.B. auf 2/3 oder die Hälfte des sonst üblichen Standardquerschnitts. Bei einem reduzierten Leitungsquerschnitt muß im Fehler- bzw. Notbetriebsfall allerdings mit einer reduzierten Dynamik bei der Steuerung des Verbrauchers gerechnet werden. Dies ist bis zum Aufsuchen einer Werkstatt aber meist tolerierbar.

Gemäß der Erfindung erzeugen die Energiequellen unterschiedliche Spannungen, z.B. 42V und 14V. Zur Transformation einer der Versorgungsspannungen auf das andere Spannungsniveau ist ein DC/DC-Wandler vorgesehen, der insbesondere bidirektional ausgeführt ist.

Bei einem bidirektionalen DC/DC-Wandler kann wahlweise das eine oder das andere Teilnetz zur Versorgung des Verbrauchers priorisiert werden, d.h. aus einem Teilnetz kann mehr oder weniger Leistung entnommen werden als aus dem anderen Teilnetz. Zu diesem Zweck wird vorzugsweise der DC/DC-Wandler entsprechend gesteuert.

Ein Fehler in einem der Teilnetze wird vorzugsweise durch geeignete akustische oder optische Mittel angezeigt.

Die Versorgungsleitungen sind vorzugsweise einzeln mittels Sicherungen abgesichert und bilden somit voneinander unabhängige Stromkreise. Dadurch hat ein Fehler in einer der Versorgungsleitungen keine Auswirkungen auf eine andere Versorgungsleitung.

Gemäß einer bevorzugten Ausführungsform der Erfindung sind auch die Steuerleitungen zu vorgegebenen sicherheitsrelevanten Verbrauchern redundant ausgeführt. So können z.B. die Steuerleitungen von der Energie- und Bremsmanagementeinheit zur Steuerung einer elektromotorischen Bremse redundant ausgeführt sein. Die Funktion des entsprechenden Verbrauchers bleibt damit auch bei einem Kurzschluss in einer der Steuerleitungen gewährleistet.

### Zeichnungen

Die Erfindung wird nachstehend anhand der beigefügten Zeichnung beispielhaft näher erläutert.

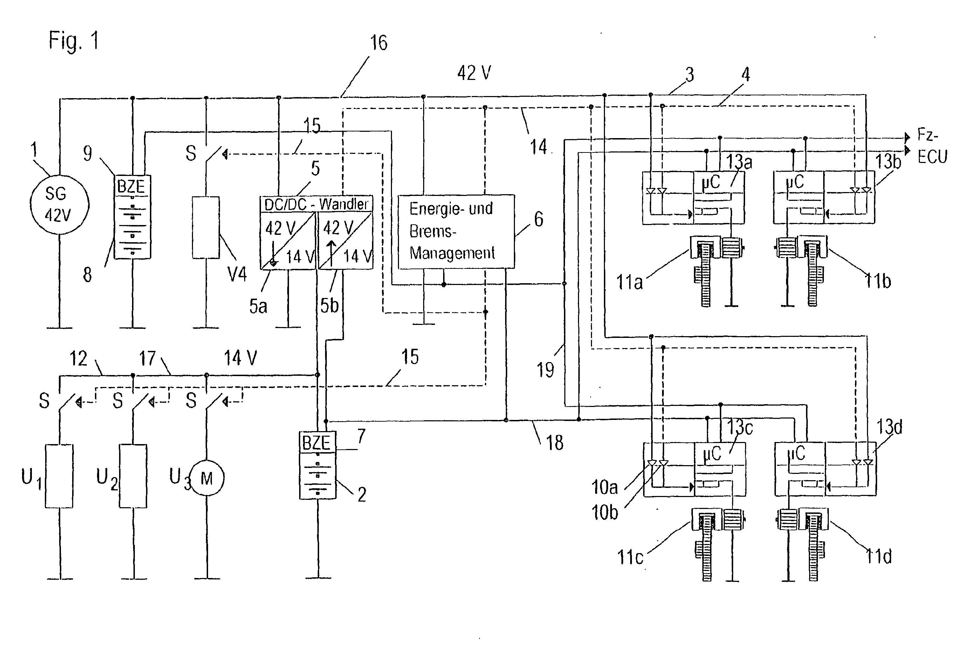

Figur 1 zeigt eine Prinzipschaltung eines elektrischen Bordnetzes in einem Kfz, mit einem Generator 1 (erste Energiequelle) zur Erzeugung einer Spannung von 42V, und einer 14V-Batterie 2 (zweite Energiequelle).

Das elektrische Bordnetz umfaßt mehrere Verbraucher V1, V2, V3, die mit 14V betrieben werden, sowie mehrere mit 42V betriebene Verbraucher V4,11a-d, im vorliegenden Fall elektromotorische Bremsen 11a-d.

Der Generator 1 dient zur Versorgung der Verbraucher während der Fahrt und gleichzeitig zum Aufladen einer 42V-Batterie 8 und der 14V-Batterie 2. Zwischen der 14V-Batterie 2 und dem Generator 1 ist ein vorzugsweise bidirektionaler DC/DC-Wandler 5a angeordnet, der die vom Generator 1 erzeugte 42V-Spannung in eine 14V-Spannung und umgekehrt transformiert. Ein weiterer, in diesem Fall unidirektionaler Wandler 5b versorgt das redundante 42V Teilnetz 14. Wie zu erkennen ist, haben die sicherheitsrelevanten Verbraucher 11a-11d eine redundante Energieversorgung, während die gewöhnlichen Verbraucher V1-V4 nur an einer einfachen Versorgungsleitung 12 bzw. 3 angeschlossen sind.

Die Teilnetze 14,16 mit den Versorgungsleitungen 3, 4 werden im dargestellten Beispiel von verschiedenen Energiequellen 1,2 gespeist, so dass auch bei Ausfall einer der Energiequellen 1,2 eine Versorgung der Bremsen 11a-11d sichergestellt ist.

Die Versorgungsleitungen 3,4 sind direkt an den elektromotorischen Bremsen 11a-11d angeklemmt und werden in deren elektronischen Steuerungen 13a-13d über Dioden 10a, 10b entkoppelt.

Da die Versorgung der elektromotorischen Bremsen 11-lld gleichzeitig über beide Versorgungsleitungen 3,4 erfolgt, kann der Querschnitt einer einzelnen Leitung 3,4 geringer sein als der Standardquerschnitt.

Die beiden Batterien 2,8 sind jeweils mit einer Batteriezustandserfassung 7,9 zur Ermittlung des Ladezustandes und der Leistungsfähigkeit der Batterie 2, 8 ausgestattet. Außerdem ist eine Einheit 6 für ein Energie- und Bremsmanagement vorgesehen, die ebenfalls über die beiden Versorgungsleitungen 3,4 redundant mit Energie versorgt wird und mit den Batteriezustanderfassungen 7,9 der beiden Batterien 2, 8 in Verbindung steht.

Die Einheit 6 verarbeitet die Signale der Batteriezustandserfassungen 7,9 und berechnet daraus den Ladezustand (SOC) und die Leistungsfähigkeit (SOH) der Batterien 2,8. Bei schwacher bzw. defekter Batterie oder einem Fehler am Generator 1 ist die Energie- und Bremsmanagementeinheit 6 in der Lage, das 42V- oder 14V-Teilnetz z.B. durch entsprechende Ansteuerung des Wandlers 5 vorrangig zu nutzen und die Versorgung der Bremsen 11a-d teilweise oder vollständig über eines der Teilnetze zu steuern. Dadurch kann ein Energieausgleich zwischen den beiden Teilnetzen herbeigeführt werden.

Außerdem kann die Einheit 6 verschiedene Verbraucher V1-V4 zu- und abschalten. Zu diesem Zweck sind Schalter S vorgesehen, die über Steuerleitungen 15 von der Energie- und Bremsmanagementeinheit 6 angesteuert werden können. Bei starker Belastung des Bordnetzes ist es somit möglich, weniger wichtige Verbraucher V1-V4 abzuschalten und Spannungseinbrüche im Netz zu verhindern.

Die Energie- und Bremsmanagementeinheit 6 ist außerdem über Steuerleitungen 18,19 mit jeweils einer Steuerung 13a-13d der elektromotorischen Bremsen 13a-13d verbunden. Die Steuerleitungen 18,19 sind ebenso wie die Versorgungsleitungen 3,4 redundant ausgeführt. Die Funktion des entsprechenden Verbrauchers bleibt damit auch bei einem Kurzschluss in einer der Steuerleitungen 18,19 gewährleistet.

### Bezugszeichenliste

- 1: Generator
- 2: 14V-Batterie
- 3: erste Versorgungsleitung
- 4: zweite Versorgungsleitung
- 5: DC/DC-Wandler
- 6: Energie- und Bremsmanagementeinheit
- 7: Batteriezustandserkennung
- 8: 42V-Batterie
- 9: Batteriezustanderkennung
- 10a,b: Dioden
- 11a-11d: elektromotorische Bremsen
- 12: 14V-Versorgungsleitung
- 13a-13d: elektronische Steuereinheit
- 14: 42V-Teilnetz
- 15: Steuerleitung
- 16: 42V-Teilnetz (redundant)
- 17: 14V-Teilnetz
- 18: Steuerleitung
- 19: Steuerleitung
- V1-V4: Verbraucher
- S: Schalter

## Patentansprüche

1. Energieversorgungssystem für Kraftfahrzeug-Bordnetze, mit mehreren Verbrauchern (V1-V4,11a-d), die von wenigstens drei Energiequellen (1,2,8) versorgt werden, wobei vorgegebene Verbraucher (11a-11d)sowohl an einer ersten Versorgungsleitung (3) als auch an einer zweiten Versorgungsleitung (4) angeschlossen sind, und die erste Versorgungsleitung (3) von der ersten Energiequelle (1, 8) und die zweite Versorgungsleitung (3) von der zweiten Energiequelle (2) gespeist wird, und die erste Energiequelle (1, 8) einen Generator, der eine hohe Versorgungsspannung (42V) erzeugt, und eine zum Generator parallel geschaltete 42V-Batterie umfasst, und die zweite Energiequelle (2) eine 14V-Batterie ist, die zur Bereitstellung einer niedrigen Versorgungsspannung (14V) dient, und über einen Spannungswandler (5b) mit der zweiten Versorgungsleitung (4) verbunden ist, und die beide Versorgungsleitungen (3, 4) direkt an die vorgegebenen Verbraucher (11a-11d) angeklemmt sind, wodurch die vorgegebenen Verbraucher (11a-11d) gleichzeitig mit Energie versorgt werden, und in den vorgegebenen Verbrauchern (11a-11d) Mittel (10a, 10b) zur Entkoppelung der von den beiden Energiequellen (1, 8) und (2) über die Versorgungsleitungen (3, 4) bereitgestellten Versorgungsspannungen vorgesehen sind.

2. Energieversorgungssystem nach Anspruch 1, **dadurch gekennzeichnet, dass** die Versorgungsleitungen (3, 4) einen verringerten Durchmesser aufweisen, insbesondere halb so dick sind wie Standard-Versorgungsleitungen.

3. Energieversorgungssystem nach Anspruch 1 oder 2, **dadurch gekennzeichnet, dass** die Mittel (10a, 10b) zur Entkoppelung der Versorgungsspannungen Dioden sind.

4. Energieversorgungssystem nach einem der vorhergehenden Ansprüche, **dadurch gekennzeichnet, dass** die erste Energiequelle (1, 8) über einen bidirektionalen DC/DC-Wandler mit der zweiten Energiequelle (2) verbunden ist.

5. Energieversorgungssystem nach einem der vorhergehenden Ansprüche, **dadurch gekennzeichnet, dass** die vorgegebenen Verbraucher (11a-11d) elektromotorische Bremsen sind, die über Steuerleitungen (18, 19) ansteuerbar sind, und die Steuerleitungen (18, 19) zu den vorgegebenen Verbrauchern (11a-11d) redundant ausgeführt sind.

## Claims

1. Power supply system for on-board motor vehicle electrical systems, comprising a plurality of loads (V1-V4, 11a-d) which are supplied with power by at least three power sources (1, 2, 8), with predefined loads (11a-11d) being connected both to a first supply line (3) and to a second supply line (4), and the first supply line (3) being fed by the first power source (1, 8) and the second supply line (3) being fed by the second power source (2), and the first power source (1, 8) comprising a generator, which generates a high supply voltage (42 V), and a 42 V battery which is connected in parallel with the generator, and the second power source (2) being a 14 V battery which serves to provide a low supply voltage (14 V) and is connected to the second supply line (4) via a voltage converter (5b), and the two supply lines (3, 4) being directly connected to the terminals of the predefined loads (11a-11d), as a result of which the predefined loads (11a-11d) are simultaneously supplied with power, and means (10a, 10b) for isolating the supply voltages which are provided by the two power sources (1, 8) and (2) via the supply lines (3, 4) being provided in the predefined loads (11a-11d).

2. Power supply system according to Claim 1, **characterized in that** the supply lines (3, 4) have a reduced diameter, in particular are half as thick as standard supply lines.

3. Power supply system according to Claim 1 or 2, **characterized in that** the means (10a, 10b) for isolating the supply voltages are diodes.

4. Power supply system according to one of the preceding claims, **characterized in that** the first power source (1, 8) is connected to the second power source (2) via a bidirectional DC/DC converter.

5. Power supply system according to one of the preceding claims, **characterized in that** the predefined loads (11a-11d) are electromotive brakes which can be actuated via control lines (18, 19), and the control lines (18, 19) to the predefined loads (11a-11d) are of redundant design.

## Revendications

1. Système d'alimentation en énergie pour des réseaux embarqués de véhicules automobiles comportant plusieurs consommateur (V1-V4, 11a-d), alimenté à partir d'au moins trois sources d'énergie (1, 2, 8), les consommateurs (11a-11d) étant reliés à la fois à une première ligne d'alimentation (3) et aussi à une seconde ligne d'alimentation (4) la première ligne d'alimentation (3) étant alimentée par la première source d'énergie (1, 8) et la seconde ligne d'alimentation (3), par la seconde source d'énergie (2) et
la première source d'énergie (1, 8) comprend un générateur générant une tension d'alimentation élevée (42V) et une batterie (42V) branchée en parallèle sur le générateur et
la seconde source d'énergie (2) est une batterie (14V) fournissant une tension d'alimentation basse (14V), reliée par un transformateur de tension (5b) à la seconde ligne d'alimentation (4) et
les deux lignes d'alimentation (3, 4) sont branchées directement sur les consommateurs (11a-11d), de sorte que les consommateurs (11a-11d) soient simultanément alimentés en énergie et
les consommateur (11a-11d) ont des moyens (10a, 10b) pour découpler la tension d'alimentation fournie par les deux sources d'énergie (1, 8) et (2) par les lignes d'alimentation (3, 4).

2. Système d'alimentation en énergie selon la revendication 1,
**caractérisé en ce que**
les lignes d'alimentation (3, 4) ont un diamètre réduit, en particulier un diamètre moitié des lignes d'alimentation standards.

3. Système d'alimentation en énergie selon les revendications 1 ou 2,
**caractérisé en ce que**
les moyens (10a, 10b) de découplage des tensions d'alimentation sont des diodes.

4. Système d'alimentation en énergie selon l'une des revendications précédentes,
**caractérisé en ce que**
la première source d'énergie (1, 8) est reliée à la seconde source d'énergie (2) par un transformateur continu/continu (DC/DC) bidirectionnel.

5. Système d'alimentation en énergie selon l'une des revendications précédentes,
**caractérisé en ce que**
les consommateurs (11a-11d) sont des freins à moteur électrique commandés par des lignes de commande (18, 19) et les lignes de commande (18, 19) sont redondantes pour les consommateurs prédéfinis (11a-11d).
